# EUROPÄISCHE PATENTSCHRIFT

(11) **EP 1 957 329 B1**
(45) Veröffentlichungstag und Bekanntmachung des Hinweises auf die Patenterteilung: **28.04.2010**
(21) Anmeldenummer: 06840947.3
(22) Anmeldetag: 23.11.2006
(51) Int. Cl.: B60R 22/195

(54) **SEILSTRAFFER MIT EINER SEILABDICHTUNG**
CABLE TENSIONER COMPRISING A CABLE SEAL
TENDEUR A CABLE DOTE D'UN DISPOSITIF D'ETANCHEITE DU CABLE

(30) Priorität: 08.12.2005 DE 102005058545
(43) Veröffentlichungstag der Anmeldung: 20.08.2008
(73) Patentinhaber: AUTOLIV DEVELOPMENT AB, 447 83 Vargarda (SE)
(72) Erfinder: LITTMANN, André, 25486 Alveslohe (DE); RUCHHÖFT, Stephan, 25336 Elmshorn (DE)
(74) Vertreter: Müller, Karl-Ernst
(86) Internationale Anmeldenummer: PCT/EP2006/011223
(87) Internationale Veröffentlichungsnummer: WO 2007/065563

(56) Entgegenhaltungen:
- EP-A- 0 625 450
- EP-A2- 1 060 958
- WO-A-03/104050
- GB-A- 2 351 948
- US-A1- 2003 122 362

## Beschreibung

Die Erfindung betrifft eine Straffvorrichtung für einen Sicherheitsgurt mit einem Strafferrohr zur Aufnahme und Führung eines druckgasgetriebenen Kolbens und mit einem an den Kolben angeschlossenen und mit einer in eine Straffbewegung zu versetzenden Sicherheitsgurtkomponente verbundenen Zugseil, wobei an das Strafferrohr eine Druckgasquelle angeschlossen und zwischen der Druckgasquelle und dem vor Auslösung der Straffvorrichtung in der Anfangsstellung befindlichen Kolben ein Druckraum ausgebildet ist.

Eine Straffvorrichtung mit den vorgenannten Merkmalen ist in der WO 03/104050 A1 wie auch in der DE 199 18 596 A1 beschrieben. Die bekannte Straffvorrichtung ist als Schlossstraffer ausgebildet, bei welchem ein Gurtschloss als zu straffende Sicherheitsgurtkomponente an das Zugseil angeschlossen ist. Das Zugseil ist über eine Umlenkvorrichtung in einem axialen Verlauf in ein geradlinig ausgebildetes Strafferrohr hineingeführt und endseitig mit einem in dem Strafferrohr verschiebbar angeordneten Kolben verbunden. Der Kolben ist mittels eines von einem Gasgenerator freigesetzten Druckgases beaufschlagbar. Hierzu ist bei der in der WO 03/104050 A1 beschriebenen Straffvorrichtung an das Strafferrohr eine den Gasgenerator aufnehmende und über eine Bohrung mit dem Inneren des Strafferrohres verbundene Kammer angeschlossen. Bei der in der DE 199 18 596 A1 beschriebenen Straffvorrichtung ist zwischen dem vor der Auslösung der Straffvorrichtung in seiner Anfangsstellung stehenden Kolben und dem der Umlenkvorrichtung zugewandten Ende des Strafferrohres in dem Strafferrohr ein Gasgeneratorgehäuse mit einem darin befindlichen Gasgenerator angeordnet, durch welches das Zugseil in einem axialen Verlauf hindurchgeführt ist. Damit das im Auslösefall von dem Gasgenerator freigesetzte Druckgas den Kolben beaufschlagen und vorschieben kann, ist bei beiden vorbekannten Straffvorrichtungen vor dem Kolben ein Druckraum belassen.

Mit einer derartigen Straffvorrichtung ist das Problem verbunden, dass der Druckraum gegen das Gasgeneratorgehäuse und insbesondere dessen Seildurchführung nicht in gesonderter Weise abgedichtet ist, so dass das freigesetzte und in den Druckraum eintretende Druckgas zu einem Teil über die Seildurchführung und das aus verwundenen Einzellitzen bestehende Seil selbst austritt. Hiermit ist in nachteiliger Weise ein schlechter Wirkungsgrad der Straffvorrichtung verbunden.

Der Erfindung liegt daher die Aufgabe zugrunde, den Wirkungsgrad einer Straffvorrichtung mit den gattungsgemäßen Merkmalen zu verbessern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass zur Abdichtung des Druckraumes gegenüber dem Zugseil an dem Strafferrohr eine das Zugseil umschließende ortsfeste Hülse mit einer in Richtung des Straffweges des Kolbens gerichteten Axialerstreckung festgelegt ist und der Kolben die Hülse dicht umgreifend auf der Hülse beweglich geführt ist derart, dass über einen der Erstreckung der Hülse entsprechenden Straffweg des Kolbens der Druckraum gegenüber dem Zugseil abgedichtet bleibt.

Mit der Erfindung ist der Vorteil verbunden, dass aufgrund der Anordnung der das Seil umschließenden und damit den Druckraum gemeinsam mit dem darauf geführten Kolben gegen das Seil abdichtenden Hülse das freigesetzte Druckgas zunächst nicht in Kontakt mit dem Seil beziehungsweise dessen Seildurchführung gelangt. Dabei wirkt der sich im Druckraum aufbauende Gasdruck radial auf die Hülse ein und verbessert deren Dichtwirkung gegenüber dem darin verlaufendem Zugseil. Hat der Kolben im Verlaufe seines Straffweges die Hülse verlassen, tritt eine Undichtigkeit des Systems ein, da nun das Druckgas über die Seildurchführung beziehungsweise das Seil selbst austreten kann. Diese Undichtigkeit ist jedoch nach Durchschreiten des von der Länge der Hülse abhängigen Straffweges seitens des Kolbens erwünscht, weil dadurch die Antriebswirkung für das Zugseil zum Ende des Straffweges hin verringert und Schäden durch ein zu starkes Abbremsen der zu straffenden Sicherheitskomponente am Ende des eingerichteten Straffweges vermieden sind.

Nach einem ersten Ausführungsbeispiel der Erfindung ist vorgesehen, dass das Zugseil an dem Kolben auf dessen der Hülse abgewandten Seite festgelegt ist und der Kolben eine der Erstreckung der Hülse entsprechende axiale Länge hat, so dass sich eine dem zur Aufrechterhaltung der Abdichtung eingerichteten Strafferweg entsprechende Überlappung zwischen Kolben und Hülse ergibt. Bei dieser Ausführungsform mit einer entsprechend großen Überlappung zwischen den Kolben selbst und der Hülse ergibt sich nur ein vergleichsweise kleiner Druckraum.

Alternativ kann vorgesehen sein, dass das Zugseil an dem Kolben auf dessen der Hülse abgewandten Seite festgelegt ist und der Kolben einen die Hülse dicht umgreifenden Ansatz mit einer die dem zur Aufrechterhaltung der Abdichtung eingerichteten Straffweg entsprechende Überlappung ausbildenden Länge aufweist. Bei diesem Ausführungsbeispiel ist der anfängliche Druckraum größer bemessen, soweit der Kolben aufgrund seines die Hülse umgreifenden Ansatzes von dem Gaseintritt entfernt angeordnet ist, wobei die Dichtwirkung so lange aufrechterhalten ist, wie der Ansatz des Kolbens und die Hülse in Überlappung stehen. Hierbei kann vorgesehen sein, dass der Kolben mit dem Ansatz einstückig ausgebildet ist und nach einem Ausführungsbeispiel vorzugsweise aus Kunststoff besteht.

Hinsichtlich der Anordnung des Druckraums ist nach einem ersten Ausführungsbeispiel der Erfindung vorgesehen, dass der Druckraum auf seiner der Druckgasquelle zugewandten Seite durch eine die Hülse tragende und wenigstens eine Durchströmöffnung für das Druckgas aufweisende Zwischenwand begrenzt ist, wobei vorgesehen sein kann, dass die Zwischenwand Bestandteil eines in das Strafferrohr eingesetzten, einen Gasgenerator aufnehmenden Gasgeneratorgehäuses ist. Bei einer derart eingerichteten axialen Zuordnung von Kolben und Gasgeneratorgehäuse kann vorgesehen sein, dass das Strafferrohr in seinem das Gasgeneratorgehäuse aufnehmenden Abschnitt eine Querschnittserweiterung aufweist.

In einer alternativen Zuordnung des Gasgeneratorgehäuses zum Strafferrohr kann vorgesehen sein, dass an einen auf der Seite der Druckgasquelle an die Zwischenwand anschließenden Abschnitt des Strafferrohres ein winklig zum Strafferrohr angesetztes Gasgeneratorgehäuse mit einem darin angeordneten Gasgenerator angeschlossen ist, wie dies im Grundsatz aus der EP 0 879 741 B1 bekannt ist.

Die Erfindung ist auch anwendbar auf eine Straffvorrichtung, bei welcher nach einem Ausführungsbeispiel der Erfindung der Kolben aus einer Mehrzahl von scheibenförmigen, gegeneinander beabstandeten Dichtelementen besteht, die an ihrem äußeren Umfang gegen die Innenwandung des Rohres anliegen. Ein derartiger Kolben findet insbesondere bei einem mit einem über den Straffweg des Kolbens ausgebildeten Krümmungsradius des Strafferrohres Anwendung.

Hierzu kann nach einem Ausführungsbeispiel der Erfindung vorgesehen sein, dass das Strafferrohr mit seinem den Kolben führenden Rohrabschnitt gegenüber dem einen Gasgenerator aufnehmenden Rohrabschnitt abgewinkelt ist und das Zugseil an der Abwinklung in das Strafferrohr hineingeführt ist, wobei die das Zugseil aufnehmende Hülse die Rohrwandung an der Abwicklung umgreift und die Seildurchführung bildet.

Bei diesem Ausführungsbeispiel einer Straffvorrichtung kann vorgesehen sein, dass die mit einem axialen Abschnitt die Rohrwandung durchgreifende Hülse innenseitig mit einer radial sich auswärts erhebenden Wulst gegen die Rohrwandung anliegt, so dass die Hülse gleichzeitig zur Abdichtung des Druckraumes gegen die Seildurchführung bildet. Soweit die Seildurchführung die eine Begrenzung für den Druckraum bildet, wird der im Druckraum einstellende Druck gegen die an der Hülse ausgebildeten Wulst und drückt diese gegen die Innenwandung des Rohres, so dass in diesem Bereich eine sichere Abdichtung erzielt ist.

Hierbei kann nach einem Ausführungsbeispiel der Erfindung vorgesehen sein, dass der Kolben an seinem der Seildurchführung zugewandten Dichtelement einen die Hülse umschließenden und vor Auslösung der Straffvorrichtung innenseitig gegen die Wulst anliegenden Ansatz aufweist, wodurch die Abdichtung des Druckraumes weiter verbessert ist.

Nach einem Ausführungsbeispiel der Erfindung ist vorgesehen, dass der Ansatz des Kolbens auf seinem äußeren Umfang von einem Verstärkungsring umschlossen ist; aufgrund des Verstärkungsringes wird die Dichtwirkung des Kolbens gegenüber der Hülse im Bereich des Ansatzes verbessert.

Soweit nach einem Ausführungsbeispiel der Erfindung vorgesehen ist, dass Kolben und Ansatz aus einem nachgiebigen, verformbaren Material bestehen, tritt insbesondere während des Verformungsweges in dem mit einem Krümmungsradius ausgeführten Rohrabschnitt eine Abstützung des Seils gegenüber der Innenwandung des Strafferrohres ein.

Zu dem gleichen Zweck kann vorgesehen sein, dass die Hülse aus einem nachgiebigen Material besteht.

Es kann vorgesehen sein, dass die Hülse auf ihrem Außenumfang mit einer wellenförmigen Kontur zur Einstellung einer gezielten Drosselwirkung während der Bewegung des Kolbens auf der Hülse versehen ist.

In der Zeichnung sind Ausführungsbeispiele de Erfindung wiedergegeben, welche nachstehend beschrieben sind. Es zeigen:
- Fig. 1: eine als Schlossstraffer ausgebildete Straffvorrichtung im Längsschnitt,
- Fig. 2: den abgedichteten Druckraum der Straffvorrichtung in einer ausschnittsweise vergrößerten Darstellung entsprechend Figur 1,
- Fig. 3: eine auf einen Gurtaufroller einwirkende Straffvorrichtung in einer schematischen Ansicht,
- Fig. 4: die Straffvorrichtung gemäß Figur 3 vor deren Auslösung im Schnitt,
- Fig. 5: den Gegenstand der Figur 4 nach Durchschreiten eines ersten Abschnitts des Strafferweges,
- Fig. 6: den Gegenstand von Figur 4 beziehungsweise Figur 5 mit einem von der Hülse freigekommenen Kolben während des weiteren Straffweges.

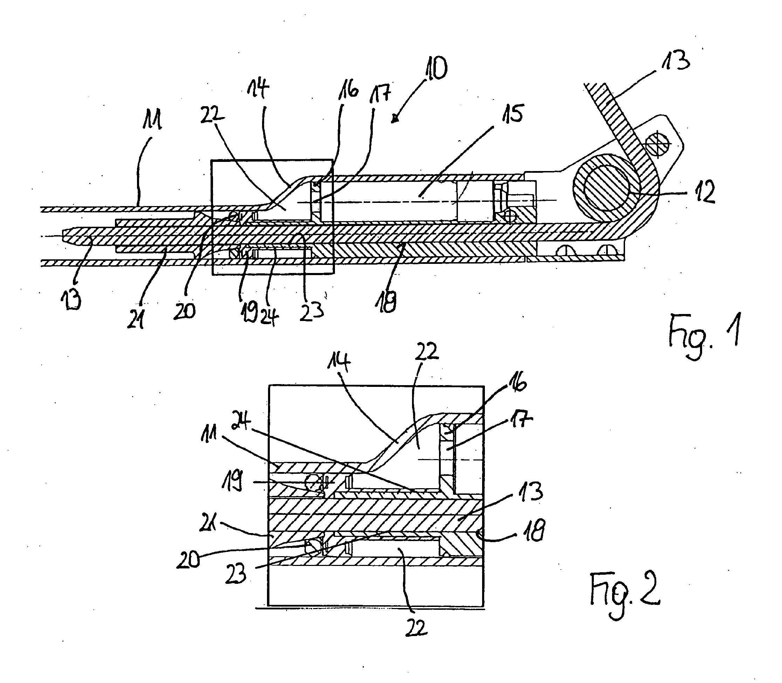

Bei dem in Figuren 1 und 2 dargestellten Ausführungsbeispiel ist die Straffvorrichtung 10 in ähnlicher Weise wie in der gattungsbildenden Druckschrift DE 199 18 596 A1 als Schlossstraffer ausgebildet, mit einem sich axial erstreckenden Strafferrohr 11, an dessen einem Ende eine Umlenkvorrichtung 12 für ein Zugseil 13 angebracht ist, an dessen freien Ende ein nicht dargestelltes Gurtschloss befestigt ist. Das Zugseil 13 ist von der Umlenkvorrichtung 12 aus in das Innere des Strafferrohres 11 hineingeführt, welches in dem an die Umlenkvorrichtung 12 anschließenden Bereich eine Querschnittserweiterung 14 zur Aufnahme eines Gasgeneratorgehäuses 15 aufweist. Das Gasgeneratorgehäuse 15 ist mit einer stirnseitigen Wand 16 gegen das Innere des Strafferrohres 11 abgeschlossen, wobei diese Zwischenwand 16 eine Durchströmöffnung 17 für das von einem in dem Gasgeneratorgehäuse 15 angeordneten Gasgenerator freigesetzte Druckgas aufweist. Das Gasgeneratorgehäuse 15 weist eine axial verlaufende Seildurchführung 18 für das Zugseil 13 auf.

Das Zugseil 13 ist mit seinem über das Gasgeneratorgehäuse 15 in das Strafferrohr 11 vorstehenden Ende an einem Kolben 19 angeschlossen und hieran mittels einer Seilklemme 21 befestigt, an der eine Rücklaufsperre 20 ausgebildet ist. Der Kolben 19 steht in seiner Anfangsstellung vor Auslösung der Straffvorrichtung mit Abstand zur Zwischenwand 16, so dass ein Druckraum 22 ausgebildet ist.

Wie sich insbesondere auch aus Figur 2 näher ergibt, trägt die Zwischenwand 16 eine sich axial zum Kolben hin erstreckende Hülse 23, die das Zugseil 13 über eine axiale Länge umschließt. Der Kolben 19 weist einen zum Gasgeneratorgehäuse 15 hin vorragenden Ansatz 24 auf, der die Hülse 23 auf deren äußeren Umfang dicht umschließt und im wesentlichen eine gleiche axiale Länge aufweist wie die Hülse 23, so dass in diesem Bereich eine axiale Überlappung von Hülse 23 und Kolben 19 mit Kolbenansatz 24 gegeben ist.

Aufgrund dieser Ausbildung ist der Druckraum 22 gegen das Zugseil 13 vollständig abgedichtet, wobei bei einem sich im Druckraum 22 nach Auslösung der Straffvorrichtung einstellenden Druck der Kolbenansatz 24 von außen her gegen die Hülse 23 gedrückt wird, so dass die Abdichtung zwischen dem Kolbenansatz 24 und der Hülse 23 verbessert ist. Aufgrund des insoweit abgeschlossenen Druckraumes kann solange kein Gas über die Seildurchführung 18 beziehungsweise das Zugseil 13 selbst nach außen austreten, wie die Überlappung zwischen Kolbenansatz 24 und Hülse 23 während des anfänglichen Kolbenweges aufrechterhalten ist. Ist mit fortschreitendem Weg des Kolbens 19 der Kolbenansatz 24 von der Hülse 23 freigekommen, kann nun das Druckgas über die insoweit freigewordene Seildurchführung 18 und das Zugseil 13 in Richtung der Umlenkvorrichtung 12 aus dem Strafferrohr beziehungsweise dem Straffersystem austreten, so dass ab dem Freikommen des Kolbenansatzes von der Hülse 23 die Antriebsenergie für den Kolben 19 nachlässt. Dieser Effekt ist gegen Ende des Straffweges des Kolbens 19 durchaus erwünscht, um eine zu starke Abbremsung des nicht dargestellten Gurtschlosses am Ende des Straffweges zu vermeiden, soweit beispielsweise das Gurtschloss auf die Umlenkvorrichtung 12 auftreffen könnte. Jedenfalls zu Beginn des Straffweges und während der Aufrechterhaltung der Überlappung von Kolben 19 und Hülse 23 ist der Wirkungsgrad der Straffvorrichtung 10 wegen einer vollständigen Abdichtung des Druckraumes 22 verbessert.

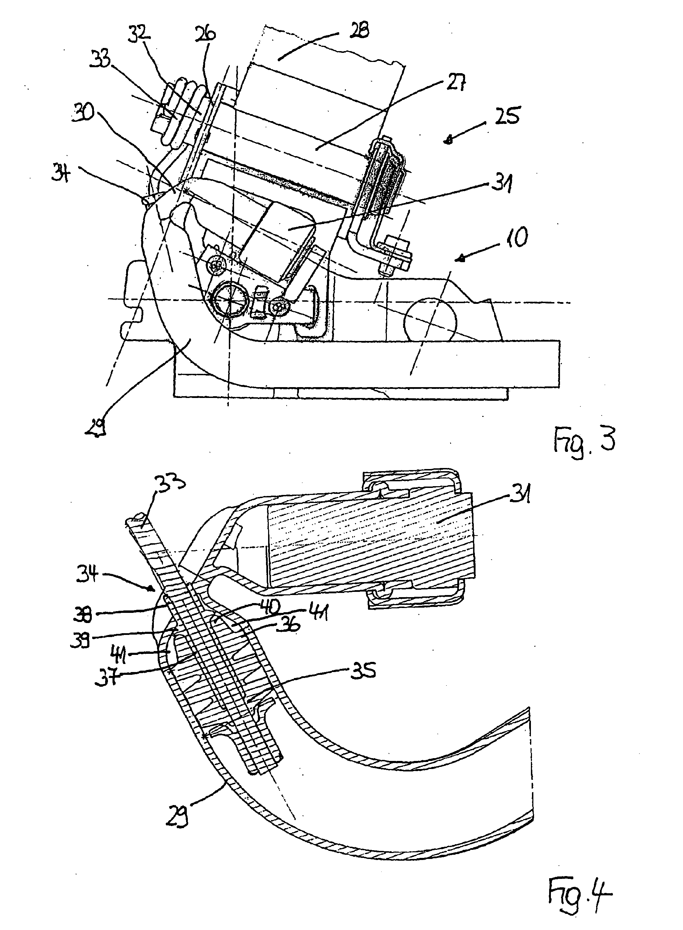

Bei dem in den Figuren 3 bis 6 dargestellten Ausführungsbeispiel wirkt die Straffvorrichtung mit einem Gurtaufroller zusammen. Insoweit hat der aus Figur 3 ersichtliche Gurtstraffer 25 ein Gehäuse 26, in welchem eine Gurtwelle 27 gelagert ist, auf der ein Gurtband 28 aufgewickelt ist. Durch Drehung der Gurtwelle 27 in Gurtaufwickelrichtung soll das Gurtband 28 gestrafft werden.

An das Gehäuse 26 ist ein Strafferrohr 29 angeflanscht, welches aufgrund der vorgegebenen Einbauverhältnisse in einem Kraftfahrzeug einen stark gekrümmten Abschnitt 30 mit einem sehr kleinen Krümmungsradius aufweist. An dem am Gehäuse 26 angeflanschten Ende des Strafferrohres 29 ist ein pyrotechnischer Antrieb 31 für die Gurtstraffeinrichtung vorgesehen. Bei dem Gurtstraffer 25 ist auf einen Wellenfortsatz 32 der Gurtwelle 27 das Zugseil 33 aufgewickelt und von hier durch eine Durchführung 34 in das Innere des Strafferrohres 29 geführt und hier an einen in dem Strafferrohr 29 beweglichen als Lamellenkolben ausgebildeten Kolben 35 angeschlossen (Figuren 4 bis 6). Durch Abwickeln des Zugseils 33 von dem Wellenfortsatz 32 wird die Gurtwelle 27 in Straffrichtung gedreht und dadurch das auf der Welle 27 aufgewickelte Gurtband 28 gestrafft.

Wie sich aus den Figuren 4 bis 6 im einzelnen ergibt, besteht der Lamellenkolben 35 aus drei gegeneinander beabstandeten, jedoch nachgiebig gegeneinander beweglichen Dichtelementen 36, die mit ihrem äußeren Umfang dichtend gegen das Innere der Wandung des Strafferrohres 29 anliegen. Bei dem dargestellten Ausführungsbeispiel ist der aus drei Dichtelementen 36 bestehende Lamellenkolben 35 einstückig ausgebildet, so dass für die Herstellung des Kolbens ein entsprechend elastisches Material Verwendung gefunden hat.

Die Durchführung 34 für das Zugseil 33 durch die Wandung des Strafferrohres 29 ist von einer das Zugseil 33 dicht umschließenden Hülse 37 gebildet, die mit einem axialen Durchgriffsabschnitt 38 die Wandung des Strafferrohres 29 durchstößt, so dass das Zugseil 33 von außen her durch den axialen Durchgriffsabschnitt 38 der Hülse 37 und deren weiteren Verlauf in das Innere des Strafferrohres 29 hineingeführt ist. Zur Abdichtung der Durchführung 34 weist die Hülse 37 eine radial auswärts gerichtete Wulst 39 auf, die gegen die Innenseite der Rohrwandung anliegt und hier eine Abdichtung darstellt.

In der in Figur 3 dargestellten Ausgangsstellung des Lamellenkolbens 35 vor Auslösung des Strafferantriebes sitzt der Lamellenkolben 35 auf der Hülse 37, indem der Lamellenkolben 35 mit einer entsprechenden axialen Länge ausgebildet ist und die axiale Erstreckung der Hülse 37 dadurch überlappend umgreift. Der Lamellenkolben 35 weist einen von dem der Durchführung 34 zugewandten Dichtelement 36 ausgehenden Ansatz 40 auf, der in der Ausgangsstellung des Lamellenkolbens 35 (Figur 3) gegen die Wulst 39 der Hülse 37 anliegt. Aufgrund dieser Konfiguration ist zwischen dem dem Ansatz 40 benachbarten Dichtelement 36, dem Ansatz 40 selbst sowie der Rohrwandung ein umlaufender Druckraum 41 gebildet, in welchen das im Auslösefall freigesetzte Druckgas eingeleitet wird.

Der sich bei Einleitung des Druckgases im Druckraum 41 aufbauende Druck beaufschlagt anfangs zunächst radial den Ansatz 40 des Lamellenkolbens 35 und presst diesen sowohl gegen die Hülse 37 als auch gegen deren Wulst 39, so dass hierdurch die Abdichtung der Hülse 37 gegen die Durchführung 34 verbessert wird. Gleichzeitig beaufschlagt der Druck aber auch die Wulst 39 der Hülse 37 in dem freiliegenden Bereich unmittelbar, so dass dadurch die Abdichtung verbessert wird.

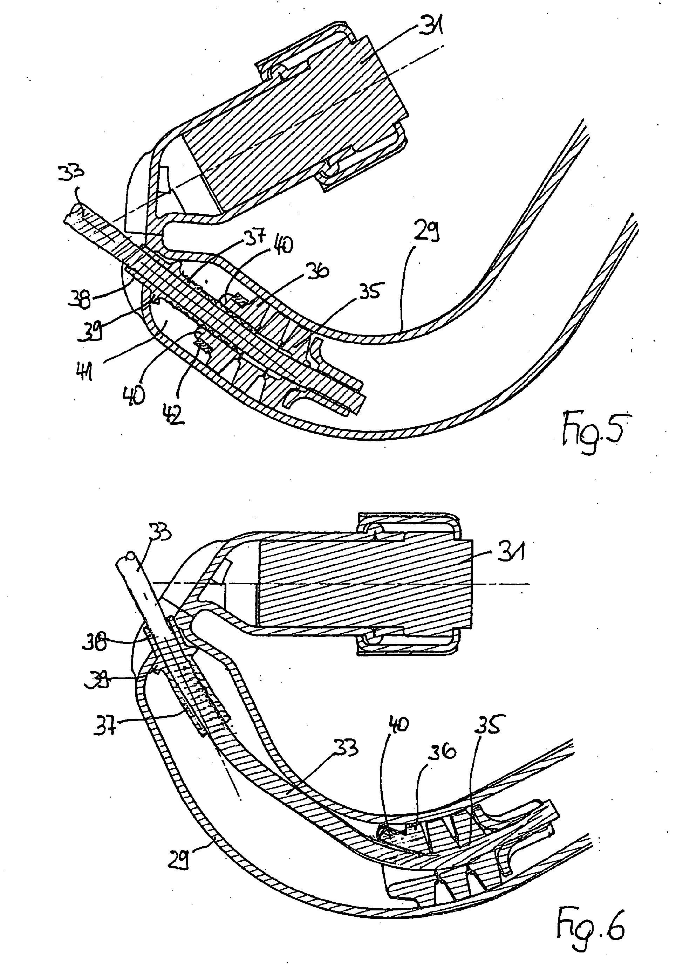

Wie sich aus Figur 4 ergibt, sorgt der sich im Druckraum 41 aufbauende Gasdruck für eine Verschiebung des Lamellenkolbens 35 in dem Strafferrohr 29, wobei der Lamellenkolben 35 zunächst auf der Hülse 37 gleitet, so dass bis zu einem Freikommen des Lamellenkolbens 35 von der Hülse 37 der Druckraum 41 gegenüber dem Zugseil 33 und dessen Durchführung durch die Hülse 37 abgedichtet ist. Bei dem in Figur 5 hierzu dargestellten Ausführungsbeispiel ist auf dem Ansatz 40 des Lamellenkolbens 35 zusätzlich ein den Ansatz 40 auf dessen Umfang umschließender Verstärkungsring 42 angeordnet, der für einen gleichmäßigen Anpressdruck des Ansatzes 40 gegen die Hülse 37 sorgt. Bei diesem Ausführungsbeispiel ist die Hülse 37 auf ihrem äußeren Umfang mit einer wellenförmigen Kontur versehen, deren einzelne Kammern eine gedrosselte Entlastung des im Druckraum 41 anstehenden Drucks bereits während des Verschiebens des Lamellenkolbens 35 auf der Hülse 37 herbeiführen. Auf diese Weise ist eine Druckregelung in einem konstruktiv festzulegenden Umfang durchzuführen.

Wie sich aus Figur 6 ergibt, zieht der von der Hülse 37 freigekommene Lamellenkolben 35 das Zugseil 33 hinter sich her, wobei der Lamellenkolben 35 aufgrund seiner Ausbildung mit einzelnen Dichtelementen 36 sich der auch in diesem Bereich des Strafferrohres 29 vorgesehenen Rohrkrümmung anpasst. Um bei einer solchen Ausbildung des Strafferrohres 29 eine gute Führung des Zugseiles 33 sicherzustellen, ist die Hülse 37 elastisch ausgebildet, so dass sich die Hülse 37 dem Verlauf des Zugseiles 33 in dem Strafferrohr 29 anpassen kann. Entsprechend verformt sich auch der Ansatz 40 des Lamellenkolbens 35 bis zu einer Anlage an der Innenkrümmung des Strafferrohres 29, so dass in diesem Bereich das Zugseil 33 abgestützt ist.

## Patentansprüche

1. Straffvorrichtung für einen Sicherheitsgurt mit einem Strafferrohr (11, 29) zur Aufnahme und Führung eines druckgasgetriebenen Kolbens (19, 35) und mit einem an den Kolben (19, 35) angeschlossenen und mit einer in eine Straffbewegung zu versetzenden Sicherheitsgurtkomponente verbundenen Zugseil (13, 33), wobei an das Strafferrohr (11, 29) eine Druckgasquelle (15, 31) angeschlossen und zwischen der Druckgasquelle (15, 31) und dem vor Auslösung der Straffvorrichtung in der Anfangsstellung befindlichen Kolben (19, 35) ein Druckraum (22, 41) ausgebildet ist, **dadurch gekennzeichnet, dass** zur Abdichtung des Druckraumes (22, 41) gegenüber dem Zugseil (13, 33) an dem Strafferrohr (11, 29) eine das Zugseil umschließende ortsfeste Hülse (23, 37) mit einer in Richtung des Straffweges des Kolbens (19, 35) gerichteten Axialerstreckung festgelegt ist und der Kolben (19, 35) die Hülse (23, 37) dicht umgreifend auf der Hülse (23, 37) beweglich geführt ist derart, dass über einen der Erstreckung der Hülse (23, 37) entsprechenden Straffweg des Kolbens (19, 35) der Druckraum (22, 41) gegenüber dem Zugseil (13, 23) abgedichtet bleibt.

2. Straffvorrichtung nach Anspruch 1, **dadurch gekennzeichnet, dass** das Zugseil (13, 33) an dem Kolben (19, 35) auf dessen der Hülse (23, 37) abgewandten Seite festgelegt ist und der Kolben (19, 35) eine der Erstreckung der Hülse (23, 37) entsprechende axiale Länge hat, so dass sich eine dem zur Aufrechterhaltung der Abdichtung eingerichteten Strafferweg entsprechende Überlappung zwischen Kolben (19, 35) und Hülse (23, 37) ergibt.

3. Straffvorrichtung nach Anspruch 1, **dadurch gekennzeichnet, dass** das Zugseil (13) an dem Kolben (19) auf dessen der Hülse (23) abgewandten Seite festgelegt ist und der Kolben (19) einen die Hülse (23) dicht umgreifenden Ansatz (24) mit einer die dem zur Aufrechterhaltung der Abdichtung eingerichteten Straffweg entsprechende Überlappung ausbildenden Länge aufweist.

4. Straffvorrichtung nach Anspruch 3, **dadurch gekennzeichnet, dass** der Kolben (19) mit dem Ansatz (24) einstückig ausgebildet ist.

5. Straffvorrichtung nach Anspruch 4, **dadurch gekennzeichnet, dass** Kolben (19) und Ansatz (24) aus Kunststoff bestehen.

6. Straffvorrichtung nach einem der Ansprüche 1 bis 5, **dadurch gekennzeichnet, dass** der Druckraum (22) auf seiner der Druckgasquelle (15) zugewandten Seite durch eine die Hülse (23) tragende und wenigstens eine Durchströmöffnung (17) für das Druckgas aufweisende Zwischenwand (16) begrenzt ist.

7. Straffvorrichtung nach Anspruch 6, **dadurch gekennzeichnet, dass** die Zwischenwand (16) Bestandteil eines in das Strafferrohr (11) eingesetzten, einen Gasgenerator aufnehmenden Gasgenerator-gehäuses (15) ist.

8. Straffvorrichtung nach Anspruch 7, **dadurch gekennzeichnet, dass** das Strafferrohr (11) in seinem das Gasgeneratorgehäuse (15) aufnehmenden Abschnitt eine Querschnittserweiterung (14) aufweist.

9. Straffvorrichtung nach Anspruch 6, **dadurch gekennzeichnet, dass** an einen auf der Seite der Druckgasquelle (15) an die Zwischenwand (16) anschließenden Abschnitt des Strafferrohres (11) ein winklig zum Strafferrohr (11) angesetztes Gasgeneratorgehäuse mit einem darin angeordneten Gasgenerator angeschlossen ist.

10. Straffvorrichtung nach Anspruch 1 oder 2, **dadurch gekennzeichnet, dass** der Kolben (35) aus einer Mehrzahl von scheibenförmigen, gegeneinander beabstandeten Dichtelementen (36) besteht, die an ihrem äußeren Umfang gegen die Innenwandung des Strafferrohres (29) anliegen.

11. Straffvorrichtung nach Anspruch 10, **dadurch gekennzeichnet, dass** das Strafferrohr (29) mit seinem den Kolben (35) führenden Rohrabschnitt gegenüber dem einen Gasgenerator (31) aufnehmenden Rohrabschnitt abgewinkelt ist und das Zugseil (33) an der Abwinklung (30) in das Strafferrohr (29) hineingeführt ist, wobei die das Zugseil (33) aufnehmende Hülse (37) die Rohrwandung an der Abwinklung (30) umgreift und die Seildurchführung (34) bildet.

12. Straffvorrichtung nach Anspruch 11, **dadurch gekennzeichnet, dass** die mit einem axialen Abschnitt (38) die Rohrwandung durchgreifende Hülse (37) innenseitig mit einer radial sich auswärts erhebenden Wulst (39) gegen die Rohrwandung anliegt.

13. Straffvorrichtung nach Anspruch 11 oder 12, **dadurch gekennzeichnet, dass** der Kolben (35) an seinem der Seildurchführung (34) zugewandten Dichtelement (36) einen die Hülse (37) umschließenden und vor Auslösung der Straffvorrichtung innenseitig gegen die Wulst (39) anliegenden Ansatz (40) aufweist.

14. Straffvorrichtung nach Anspruch 13, **dadurch gekennzeichnet, dass** der Ansatz (40) des Kolbens (35) auf seinem äußeren Umfang von einem Verstärkungsring (42) umschlossen ist.

15. Straffvorrichtung nach einem der Ansprüche 10 bis 14, **dadurch gekennzeichnet, dass** Kolben (35) und Ansatz (40) aus einem nachgiebigen, verformbaren Material bestehen.

16. Straffvorrichtung nach einem der Ansprüche 10 bis 15, **dadurch gekennzeichnet, dass** die Hülse (37) aus einem nachgiebigen Material besteht.

17. Straffvorrichtung nach einem der Ansprüche 10 bis 16, **dadurch gekennzeichnet, dass** die Hülse (37) auf ihrem Außenumfang mit einer wellenförmigen Kontur zur Einstellung einer gezielten Drosselwirkung während der Bewegung des Kolbens (35) auf der Hülse (37) versehen ist.

## Claims

1. Tensioning device for a seat belt with a tensioning tube (11, 29) for receiving and guiding a piston (19, 35) driven by compressed gas and with a traction cable (13, 33) which is joined to the piston (19, 35) and is connected to a seat belt component to be moved into a tensioning movement, with a compressed gas source (15, 31) being joined to the tensioning tube (11, 29) and with a pressure space (22, 41) being formed between the compressed gas source (15, 31) and the piston (19, 35), which is in the starting position before the tensioning device is triggered, **characterized in that**, in order to seal the pressure space (22, 41) with respect to the traction cable (13, 33) on the tensioning tube (11, 29), a positionally fixed sleeve (23, 37) surrounding the traction cable is fixed with an axial extent directed in the direction of the tensioning path of the piston (19, 35), and the piston (19, 35), engaging tightly around the sleeve (23, 37), is guided movably on the sleeve (23, 37) in such a manner that the pressure space (22, 41) remains sealed in relation to the traction cable (13, 23) over a tensioning path of the piston (19, 35) that corresponds to the extent of the sleeve (23, 37) .

2. Tensioning device according to Claim 1, **characterized in that** the traction cable (13, 33) is fixed to the piston (19, 35) on its side facing away from the sleeve (23, 37) and the piston (19, 35) has an axial length corresponding to the extent of the sleeve (23, 37) , thus resulting in an overlap between piston (19, 35) and sleeve (23, 37) that corresponds to the tensioning path set up to maintain the seal.

3. Tensioning device according to Claim 1, **characterized in that** the traction cable (13) is fixed to the piston (19) on its side facing away from the sleeve (23), and the piston (19) has an extension (24), which engages tightly around the sleeve (23), with a length forming the overlap corresponding to the tensioning path set up to maintain the seal.

4. Tensioning device according to Claim 3, **characterized in that** the piston (19) is formed integrally with the extension (24).

5. Tensioning device according to Claim 4, **characterized in that** the piston (19) and extension (24) are composed of plastic.

6. Tensioning device according to one of Claims 1 to 5, **characterized in that** the pressure space (22) is bounded on its side facing the compressed gas source (15) by an intermediate wall (16) which supports the sleeve (23) and has at least one throughflow opening (17) for the compressed gas.

7. Tensioning device according to Claim 6, **characterized in that** the intermediate wall (16) is part of a gas generator housing (15) which is inserted into the tensioning tube (11) and receives a gas generator.

8. Tensioning device according to Claim 7, **characterized in that** the tensioning tube (11) has a cross-sectional widening (14) in its section accommodating the gas generator housing (15).

9. Tensioning device according to Claim 6, **characterized in that** a gas generator housing, which is fitted at an angle to the tensioning tube (11) and has a gas generator arranged in it, is joined on the side of the compressed gas source (15) to that section of the tensioning tube (11) which adjoins the intermediate wall (16).

10. Tensioning device according to Claim 1 or 2, **characterized in that** the piston (35) comprises a plurality of disc-shaped sealing elements (36) which are spaced apart from one another and bear on their outer circumference against the inner wall of the tensioning tube (29).

11. Tensioning device according to Claim 10, **characterized in that** the tensioning tube (29) is angled with its tube section guiding the piston (35) in relation to the tube section accommodating a gas generator (31), and the traction cable (33) is guided at the angled portion (30) into the tensioning tube (29), with the sleeve (37) accommodating the traction cable (33) engaging around the tube wall at the angled portion (30) and forming the cable lead-through (34).

12. Tensioning device according to Claim 11, **characterized in that** the sleeve (37) reaching with an axial section (38) through the tube wall bears on the inside with a radially outwardly raised bead (39) against the tube wall.

13. Tensioning device according to Claim 11 or 12, **characterized in that** the piston (35) has, on its sealing element (36) facing the cable lead-through (34), an extension (40) which surrounds the sleeve (37) and bears on the inside against the bead (39) before the tensioning device is triggered.

14. Tensioning device according to Claim 13, **characterized in that** the extension (40) of the piston (35) is surrounded on its outer circumference by a reinforcing ring (42).

15. Tensioning device according to one of Claims 10 to 14, **characterized in that** piston (35) and extension (40) are composed of a flexible, deformable material.

16. Tensioning device according to one of Claims 10 to 15, **characterized in that** the sleeve (37) is composed of a flexible material.

17. Tensioning device according to one of Claims 10 to 16, **characterized in that** the sleeve (37) is provided on its outer circumference with an undulating contour in order to set a specific throttling action during the movement of the piston (35) on the sleeve (37).

## Revendications

1. Tendeur pour une ceinture de sécurité avec un tube tendeur (11, 29) pour la réception et le guidage d'un piston (19, 35) entraîné par du gaz comprimé et avec un câble de traction (13, 33) raccordé au piston (19, 35) et relié à un composant de ceinture de sécurité à décaler dans un mouvement de tension, une source de gaz comprimé (15, 31) étant raccordé au tube tendeur (11, 29) et un espace de pression (22, 41) étant réalisé entre la source de gaz comprimé (15, 31) et le piston (19, 35) se trouvant en position initiale avant le déclenchement du tendeur, **caractérisé en ce que**, pour rendre étanche l'espace de pression (22, 41) par rapport au câble de traction (13, 33), est fixée une douille (23, 37) fixe entourant le câble de traction avec une extension axiale dirigée en direction de la course de tension du piston (19, 35) sur le tube tendeur (11, 29) et le piston (19, 35) est guidé de manière mobile sur la douille (23, 37) en l'entourant de manière étanche de telle sorte que sur une course de tension du piston (19, 35) correspondant à l'extension de la douille (23, 37), l'espace de pression (22, 41) reste étanche par rapport au câble de traction (13, 23).

2. Tendeur selon la revendication 1, **caractérisé en ce que** le câble de traction (13, 33) est fixé sur le piston (19, 35) sur son côté éloigné de la douille (23, 37) et le piston (19, 35) a une longueur axiale correspondant à l'extension de la douille (23, 37) de sorte qu'il résulte un chevauchement correspondant à la course de tension établie pour le maintien de l'étanchéité entre le piston (19, 35) et la douille (23, 37).

3. Tendeur selon la revendication 1, **caractérisé en ce que** le câble de traction (13) est fixé sur le piston (19) sur son côté éloigné de la douille (23) et le piston (19) présente une saillie (24) entourant de manière étanche la douille (23) avec une longueur réalisant le chevauchement correspondant à la course de tension établie pour le maintien de l'étanchéité.

4. Tendeur selon la revendication 3, **caractérisé en ce que** le piston (19) est réalisé d'un seul tenant avec la saillie (24).

5. Tendeur selon la revendication 4, **caractérisé en ce que** le piston (19) et la saillie (24) se composent de matière plastique.

6. Tendeur selon l'une quelconque des revendications 1 à 5, **caractérisé en ce que** l'espace de pression (22) est délimité sur son côté tourné vers la source de gaz comprimé (15) par une paroi intermédiaire (16) portant la douille (23) et présentant au moins une ouverture de passage (17) pour le gaz comprimé.

7. Tendeur selon la revendication 6, **caractérisé en ce que** la paroi intermédiaire (16) est un composant d'un boîtier de générateur à gaz (15) recevant un générateur à gaz, utilisé dans le tube tendeur (11).

8. Tendeur selon la revendication 7, **caractérisé en ce que** le tube tendeur (11) présente dans sa partie recevant le boîtier de générateur à gaz (15) un élargissement de section (14).

9. Tendeur selon la revendication 6, **caractérisé en ce qu'**à une partie du tube tendeur (11) se raccordant sur le côté de la source de gaz comprimé (15) à la paroi intermédiaire (16) est raccordé un boîtier de générateur à gaz fixé de manière angulaire au tube tendeur (11) avec un générateur à gaz disposé dedans.

10. Tendeur selon la revendication 1 ou 2, **caractérisé en ce que** le piston (35) se compose d'une pluralité d'éléments étanches (36) espacés les uns contre les autres, en forme de disque, qui reposent sur leur périphérie extérieure contre la paroi intérieure du tube tendeur (29).

11. Tendeur selon la revendication 10, **caractérisé en ce que** le tube tendeur (29) est coudé avec sa partie de tube guidant le piston (35) par rapport à la partie de tube recevant un générateur à gaz (31) et le câble de traction (33) est introduit au niveau du coude (30) dans le tube tendeur (29), la douille (37) recevant le câble de traction (33) entourant la paroi de tube au niveau du coude (30) et formant le passage de câble (34).

12. Tendeur selon la revendication 11, **caractérisé en ce que** la douille (37) traversant avec une partie (38) axiale la paroi de tube repose côté intérieur avec un bourrelet (39) se relevant radialement vers l'extérieur contre la paroi de tube.

13. Tendeur selon la revendication 11 ou 12, **caractérisé en ce que** le piston (35) présente sur son élément étanche (36) tourné vers le passage de câble (34) une saillie (40) entourant la douille (37) et reposant avant le déclenchement du tendeur côté intérieur contre le bourrelet (39).

14. Tendeur selon la revendication 13, **caractérisé en ce que** la saillie (40) du piston (35) est entourée sur sa périphérie extérieure par un anneau de renforcement (42).

15. Tendeur selon l'une quelconque des revendications 10 à 14, **caractérisé en ce que** le piston (35) et la saillie (40) se composent d'un matériau flexible, déformable.

16. Tendeur selon l'une quelconque des revendications 10 à 15, **caractérisé en ce que** la douille (37) se compose d'un matériau flexible.

17. Tendeur selon l'une quelconque des revendications 10 à 16, **caractérisé en ce que** la douille (37) est pourvue sur sa périphérie extérieure d'un contour ondulé pour le réglage d'une action d'étranglement ciblée pendant le déplacement du piston (35) sur la douille (37).
